# EUROPEAN PATENT APPLICATION

(11) **EP 4 535 224 A1**
(43) Date of publication of application: **09.04.2025**
(21) Application number: 22944914.5
(22) Date of filing: 02.06.2022
(51) Int. Cl.: G06F 40/166, G06F 40/216, G06F 40/232, G06F 40/253, G06F 40/44

(54) **INFORMATION PROCESSING PROGRAM, INFORMATION PROCESSING METHOD, AND INFORMATION PROCESSING DEVICE**

(71) Applicant: FUJITSU LIMITED, Kawasaki-shi, Kanagawa 211-8588 (JP)
(72) Inventor: KATAOKA, Masahiro, Kawasaki-shi, Kanagawa 211-8588 (JP); MATSUMURA, Ryo, Kawasaki-shi, Kanagawa 211-8588 (JP); ONOUE, Satoshi, Kawasaki-shi, Kanagawa 211-8588 (JP)
(74) Representative: Hoffmann Eitle
(86) International application number: PCT/JP2022/022525
(87) International publication number: WO 2023/233633

(57) **Abstract**

An information processing apparatus calculates individual vectors of a plurality of continuous sentences that have a relationship with preceding and following sentences. The information processing apparatus generates a machine learning model that predicts a sentence vector of a sentence input next to a certain sentence when a vector of the certain sentence is input to the machine learning model, by sequentially inputting the vectors of the plurality of sentences to the machine learning model and training the machine learning model. The information processing apparatus calculates a vector of a first sentence and a vector of a second sentence next to the first sentence. The information processing apparatus calculates a vector of a sentence predicted to be next to the first sentence by inputting the vector of the first sentence to the machine learning model, and determines whether or not the vector of the second sentence is appropriate.

## Description

### Technical Field

The present invention relates to an information processing program, and the like.

### Background Art

In recent years, services for calculating vectors of sentences and executing various types of processing such as translation into another language and database search by using the calculated vectors are provided. However, when there is an input error or the like in a sentence itself designated by a user, the vectors of the sentences may not be accurately calculated, and an error may occur in processing such as translation and search.

For example, an appropriate sentence "the function is a feature" and an input error sentence "the yesterday is a feature" are sentences having significantly different meanings from each other, and vectors of the sentences are also significantly different from each other.

As a related art for revising an input error of a sentence, there is a related art in which an input error of a target sentence is revised by training a learning model by using a data set of pairs of an input error and a corresponding revised sentence from a revision history and inputting the target sentence to the trained learning model.

### Citation List

### Patent Literature

PTL 1: Japanese Laid-open Patent Publication No. 2019-101993

### Non Patent Literature

NPL 1: Kazuhiro Miki et al., "Answering English Fill-in-the-blank Questions Using BERT", Department of Information Technology Faculty of Engineering, Okayama University, DEIM2020 G2-4 (day1 p47)
NPL 2: Tanaka Yu et al., "'Building Japanese Input Error Dataset Using Wikipedias Revision History", Department of Intelligence Science and Technology, Kyoto University Graduate School, The Association for Natural Language Processing, 26-th Annual Meeting, Journal, March 2020.

### Summary of Invention

### Technical Problem

In the related art described above, there is a technology of filling a blank in which a word or the like of a part of a text is masked, and this technology has high accuracy of a word for filling a blank in a sentence constituted by a plurality of words. However, there are few technologies of increasing the accuracy of a sentence for filling a blank in a text constituted by a plurality of sentences, and there is no technology of detecting a sentence having an input error. In addition, in the related art, an input error such as a typographical error or an omission may be revised, but an input error due to incorrect conversion may not be revised in many cases.

In one aspect, an object of the present invention is to provide a an information processing program, an information processing method, and an information processing apparatus that are capable of estimating a sentence to be filled in a blank in a text constituted by a plurality of sentences and detecting a sentence having an input error.

### Solution to Problem

In a first aspect, a computer is caused to execute the following processing. The computer calculates individual vectors of a plurality of continuous sentences that have a relationship with preceding and following sentences. The computer generates a machine learning model that predicts a sentence vector of a sentence input next to a certain sentence when a vector of the certain sentence is input to the machine learning model, by sequentially inputting the vectors of the plurality of sentences to the machine learning model and training the machine learning model. The computer calculates a vector of a first sentence and a vector of a second sentence next to the first sentence. The computer calculates a vector of a sentence predicted to be next to the first sentence by inputting the vector of the first sentence to the machine learning model, and determines whether or not the vector of the second sentence is appropriate.

### Advantageous Effects of Invention

The sentence for filling the blank in the text constituted by the plurality of sentences may be estimated, and the sentence having the input error may be detected.

### Brief Description of Drawings

[FIG. 1] FIG. 1 is a diagram for describing processing in a learning phase of an information processing apparatus according to the present embodiment.
[FIG. 2] FIG. 2 is a diagram for describing processing in an analysis phase of the information processing apparatus according to the present embodiment.
[FIG. 3] FIG. 3 is a functional block diagram illustrating a configuration of the information processing apparatus according to the present embodiment.
[FIG. 4] FIG. 4 is a diagram illustrating an example of a data structure of a word vector dictionary.
[FIG. 5A] FIG. 5A is a diagram (1) for describing processing of calculating a sentence vector.
[FIG. 5B] FIG. 5B is a diagram (2) for describing the processing of calculating the sentence vector.
[FIG. 6] FIG. 6 is a diagram for describing processing of generating a sentence transposition index.
[FIG. 7] FIG. 7 is a flowchart illustrating a processing procedure in the learning phase of the information processing apparatus according to the present embodiment.
[FIG. 8] FIG. 8 is a flowchart illustrating a processing procedure in the analysis phase of the information processing apparatus according to the present embodiment.
[FIG. 9] FIG. 9 is a diagram (1) for describing other processing of the information processing apparatus.
[FIG. 10] FIG. 10 is a diagram (2) for describing other processing of the information processing apparatus.
[FIG. 11] FIG. 11 is a diagram illustrating an example of a hardware configuration of a computer that implements functions similar to functions of the information processing apparatus according to the embodiment.

### Description of Embodiments

Hereinafter, embodiments of an information processing program, an information processing method, and an information processing apparatus disclosed in the present application will be described in detail with reference to the drawings. Note that this invention is not limited by the embodiments.

### [EMBODIMENTS]

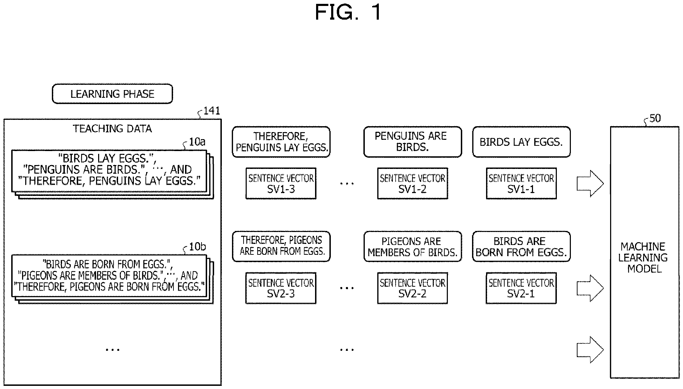

Processing of the information processing apparatus according to the present embodiment will be described. After processing in a learning phase is executed, the information processing apparatus executes processing in an analysis phase. FIG. 1 is a diagram for describing the processing in the learning phase of the information processing apparatus according to the present embodiment.

In the learning phase, the information processing apparatus executes learning of a machine learning model 50 (trains the machine learning model 50) by using a plurality of texts included in teaching data 141. The machine learning model 50 is a neural network (NN) such as pre-training of Deep Bidirectional Transformers for Language Understanding (BERT), Next Sentence Prediction, and Transformers.

The text included in the teaching data 141 include a plurality of sentences. The plurality of sentences has a predetermined relationship with preceding and following sentences. Each sentence is a sentence set in advance based on a syllogism of an inductive method or a deductive method, or the like.

For example, in a text 10a, a sentence "Birds lay eggs.", a sentence "Penguins are birds.", ···, and a sentence "Therefore, penguins lay eggs." in order from a first sentence. In a text 10b, a sentence "Birds are born from eggs.", a sentence "Pigeons are members of birds.", ···, and a sentence "Therefore, pigeons are born from eggs." in order from a first sentence.

The information processing apparatus calculates sentence vectors of respective sentences included in the texts 10a and 10b and other texts. For example, the information processing apparatus calculates a sentence vector by executing morphological analysis on a sentence to divide the sentence into words and integrating the vectors of the respective words.

A sentence vector of the sentence "Birds lay eggs." of the text 10a is "SV1-1". A sentence vector of the sentence "Penguins are birds" is "SV1-2". A sentence vector of the sentence "Therefore, penguins lay eggs." is "SV1-3".

A sentence vector of the sentence "Birds are born from eggs." of the text 10b is "SV2-1". A sentence vector of the sentence "Pigeons are members of birds." is "SV2-2". A sentence vector of the sentence "Therefore, pigeons lay eggs." is "SV2-3".

The information processing apparatus repeatedly executes processing of inputting vectors to the machine learning model 50 in order from the vector of the first sentence included in the text. For example, the information processing apparatus inputs the sentence vectors to the machine learning model 50 in the order of the sentence vectors "SV1-1", "SV1-2", ···, and "SV1-3". The information processing apparatus inputs the sentence vectors to the machine learning model 50 in the order of the sentence vectors "SV2-1", "SV2-2", ···, and "SV2-3".

By the information processing apparatus executing the processing in the learning phase described above, the machine learning model 50 that predicts a sentence vector of a second sentence next to a certain first sentence in a case where a sentence vector of the first sentence is input is generated.

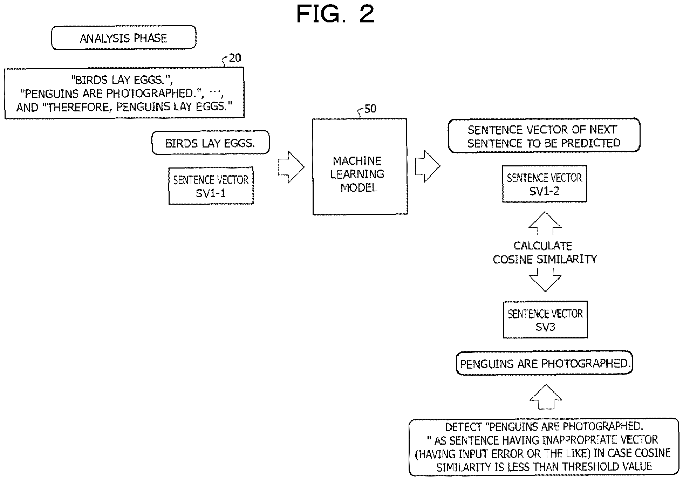

FIG. 2 is a diagram for describing the processing in the analysis phase of the information processing apparatus according to the present embodiment. In the analysis phase, the information processing apparatus calculates a sentence vector included in a text to be processed by using the trained machine learning model 50, and detects an inappropriate sentence based on a cosine similarity or the like.

In the description of FIG. 2, a text to be processed including an input error or the like is referred to as a text 20. The text 20 includes a sentence "Birds lay eggs.", a sentence "Penguins are photographed.", ···, and a sentence "Therefore, penguins lay eggs." in order from a first sentence. The sentence "Penguins are photographed." is a sentence including an input error of "photographed" which is a homonym of a word "birds" for a correct sentence "Penguins are birds." included in the text 10a of the teaching data 141.

The information processing apparatus predicts a sentence vector of a next sentence of the sentence "Birds lay eggs." by calculating the sentence vector "SV1-1" of the sentence "Birds lay eggs." and inputting the calculated sentence vector "SV1-1" to the machine learning model 50. In the example illustrated in FIG. 2, "SV1-2" is predicted as the sentence vector of the next sentence of the sentence "Birds lay eggs." by the machine learning model 50.

The information processing apparatus calculates a sentence vector "SV3" of "Penguins are photographed", which is the sentence included in the text 20 and is next to the sentence "Birds lay eggs.".

The information processing apparatus calculates a cosine similarity between the sentence vector "SV1-2" of the next sentence predicted by the machine learning model 50 and the sentence vector "SV3" of the sentence "Penguins are photographed", which is included in the text 20 and is next to the sentence "Birds lay eggs.".

The information processing apparatus determines that the sentence "Penguins are birds.", which is included in the text 10a and is next to the sentence "Birds lay eggs", is a correct (hereinafter, referred to as appropriate) sentence as a case where the cosine similarity is less than a threshold value. On the other hand, the information processing apparatus determines that the "Penguins are photographed.", which is included in the text 20 and is next to the sentence "Birds lay eggs.", is an inappropriate sentence including an input error or the like as a case where the cosine similarity is less than the threshold value.

As described above, the vectors of the respective sentences of the text included in the teaching data 141 are sequentially input to the machine learning model 50, and thus, the information processing apparatus generates the machine learning model 50 that predicts the sentence vector of the second sentence next to the certain first sentence in a case where the sentence vector of the first sentence is input. The information processing apparatus inputs a sentence vector of a sentence of a text to be processed to the generated machine learning model, predicts a sentence vector of a next sentence, and detects a sentence including an input error from the text to be processed based on the predicted sentence vector. That is, a sentence including an input error or the like and having an inappropriate sentence vector may be detected from the sentences included in the text to be processed.

Note that in the processing of FIG. 2, in a case where it is determined that the sentence "Penguins are photographed" is a sentence having an inappropriate sentence vector, the information processing apparatus may search for the sentence "Penguins are birds." having an appropriate sentence vector from a database (DB) or the like based on the sentence vector SV1-2 predicted by the machine learning model 50, and may output (hereinafter, referred to as "correct"), as a correct revision candidate, the sentence having the appropriate sentence vector to a display device.

By using another machine learning model that has learned the order of vectors on a word-by-word basis, the information processing apparatus may calculate respective word vectors of a plurality of words "Penguins", "are", and "photographed." constituting the sentence "Penguins are photographed" from which the inappropriate sentence vector is detected, and may correct an input error or the like of the deviating word "photographed.".

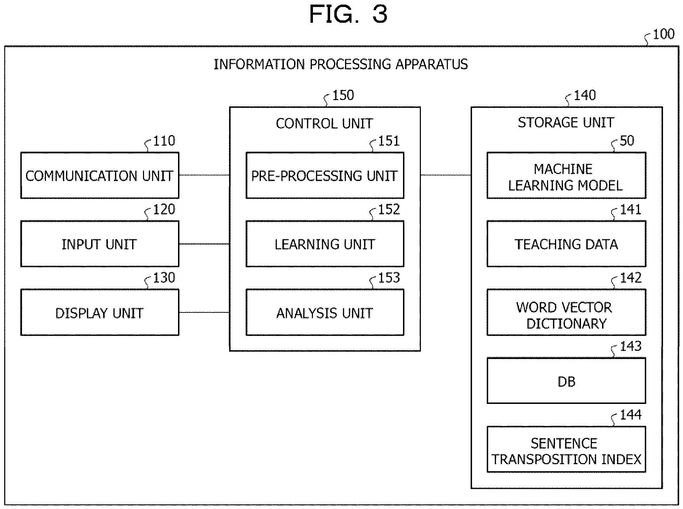

Next, a configuration example of the information processing apparatus that executes the processing described in FIGs. 1 and 2 will be described. FIG. 3 is a functional block diagram illustrating a configuration of the information processing apparatus according to the present embodiment. As illustrated in FIG. 3, an information processing apparatus 100 includes a communication unit 110, an input unit 120, a display unit 130, a storage unit 140, and a control unit 150.

The communication unit 110 is coupled to an external apparatus or the like in a wired or wireless manner, and transmits and receives information to and from the external apparatus or the like. The communication unit 110 is implemented by, for example, a network interface card (NIC) or the like. The communication unit 110 may be coupled to a network (not illustrated).

The input unit 120 is an input device that inputs various types of information to the information processing apparatus 100. The input unit 120 corresponds to a keyboard, a mouse, a touch panel, or the like. For example, a user may input data of a text or the like by operating the input unit 120.

The display unit 130 is a display device that displays information output from the control unit 150. The display unit 130 corresponds to a liquid crystal display, an organic electroluminescence (EL) display, a touch panel, or the like. For example, a sentence having an input error is displayed on the display unit 130.

The storage unit 140 includes the machine learning model 50, the teaching data 141, and a word vector dictionary 142. For example, the storage unit 140 is implemented by a semiconductor memory device such as a random-access memory (RAM) or a flash memory, or a storage device such as a hard disk or an optical disk.

The machine learning model 50 is an NN or the like such as BERT, Next Sentence Prediction, or Transformers described in FIG. 1.

The teaching data 141 is the teaching data 141 described in FIG. 1. The text included in the teaching data 141 include a plurality of sentences. The plurality of sentences have a predetermined relationship with preceding and following sentences. Each sentence is a sentence set in advance based on a syllogism of an inductive method or a deductive method, or the like.

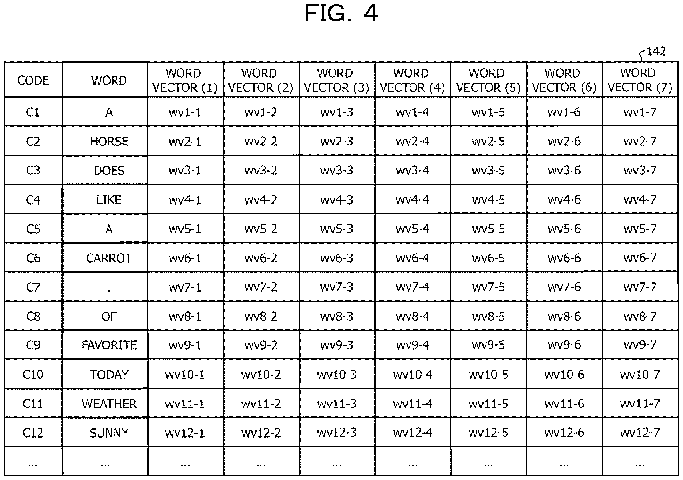

The word vector dictionary 142 is a table that defines codes and word vectors assigned to words. FIG. 4 is a diagram illustrating an example of a data structure of the word vector dictionary. As illustrated in FIG. 4, the word vector dictionary 142 includes a code, a word, and word vectors (1) to (7). The code is a code assigned to a word. The word is the word included in a character string. The word vectors (1) to (7) are vectors assigned to the word. An N-th component of the word vector is denoted as a word vector (n) (n = 1 to 7).

A DB 143 has various texts. A text includes a plurality of sentences, and each sentence includes a plurality of words. The DB 143 may have the texts included in the teaching data 141.

A sentence transposition index 144 associates a sentence vector with a position pointer. The position pointer indicates a position in the DB 143 where a sentence corresponding to the sentence vector is present.

The description returns to FIG. 3. The control unit 150 includes a pre-processing unit 151, a learning unit 152, and an analysis unit 153. For example, the control unit 150 is implemented by a central processing unit (CPU) or a micro processing unit (MPU). In addition, the control unit 150 may also be executed by, for example, an integrated circuit such as an application-specific integrated circuit (ASIC) or a field-programmable gate array (FPGA).

The pre-processing unit 151 executes various types of pre-processing. For example, the pre-processing unit 151 acquires a sentence from the DB 143 in an unprocessed manner, and calculates a sentence vector of the sentence. The pre-processing unit 151 sets a relationship between the calculated sentence vector and the position pointer of the sentence corresponding to the sentence vector in the sentence transposition index 144.

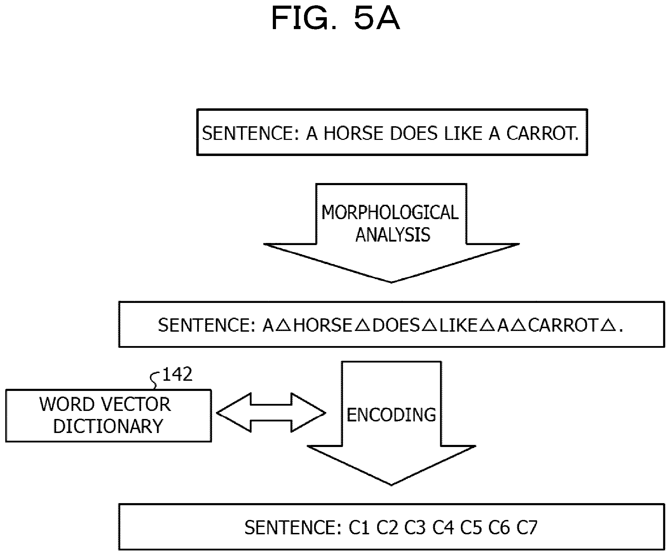

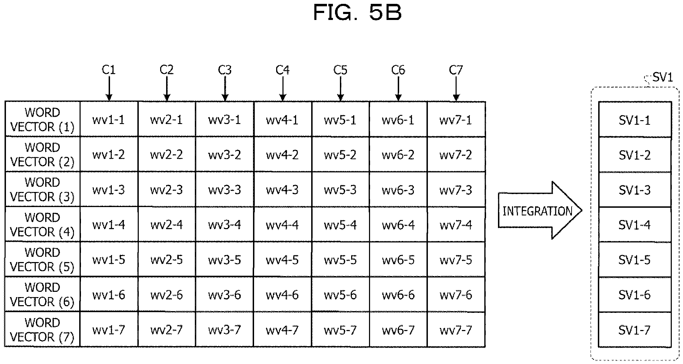

An example of processing of, by the pre-processing unit 151, calculating the sentence vector of the sentence will be described. FIGs. 5A and 5B are diagrams for describing the processing of calculating the sentence vector. Herein, a case where a sentence vector of a sentence "A horse does like a carrot." is calculated will be described. The pre-processing unit 151 decomposes the sentence "A horse does like a carrot." into a plurality of words by executing morphological analysis. "△ (space)" is given to each of the decomposed words. For example, Sentence 1 "A horse does like a carrot." is divided into "A△", "horse△", "does△", "like△", "a△", "carrot△", and ".△".

The pre-processing unit 151 specifies codes corresponding to the respective words and replaces the words with the respective codes, by comparing the individual divided words with the word vector dictionary 45. For example, the individual words "A△", "horse△", "does△", "like△", "a△", "carrot△", and .△" are replaced with "C1", "C2", "C3", "C4", "C5", "C6", and "C7", respectively.

Description proceeds to FIG. 5B. The pre-processing unit 151 specifies the word vectors (1) to (7) assigned to the codes based on the word vector dictionary 45 and the individual codes. For example, the word vectors (1) to (7) of the code "C1" are wv1-1 to wv1-7. The word vectors (1) to (7) of the code "C2" are wv2-1 to wv2-7. The word vectors (1) to (7) of the code "C3" are wv3-1 to wv3-7.

The word vectors (1) to (7) of the code "C4" are wv4-1 to wv4-7. The word vectors (1) to (7) of the code "C5" are wv5-1 to wv5-7. The word vectors (1) to (7) of the code "C6" are wv6-1 to wv6-7. The word vectors (1) to (7) of the code "C7" are wv7-1 to wv7-7.

The pre-processing unit 151 calculates the sentence vector SV1 of the sentence by integrating the word vectors for each element. For example, the pre-processing unit 151 calculates a first component "SV1-1" of the sentence vector SV1 by integrating wv1-1 to wv7-1 serving as the respective word vectors (1). The pre-processing unit 151 calculates a second component "SV1-2" of the sentence vector SV1 by integrating wv1-2 to wv7-2 serving as the respective word vectors (2). The pre-processing unit calculates a third component "SV1-3" of the sentence vector SV1 by integrating wv1-3 to wv7-3 serving as the respective word vectors (3).

The pre-processing unit 151 calculates a fourth component "SV1-4" of the sentence vector SV1 by integrating wv1-4 to wv7-4 serving as the respective word vectors (4). The pre-processing unit 151 calculates a fifth component "SV1-5" of the sentence vector SV1 by integrating wv1-5 to wv7-5 serving as the respective word vectors (5). The pre-processing unit 151 calculates a sixth component "SV1-6" of the sentence vector SV1 by integrating wv1-6 to wv7-6 serving as the respective word vectors (6). The pre-processing unit 151 calculates a seventh component "SV1-7" of the sentence vector SV1 by integrating wv1-7 to wv7-7 serving as the respective word vectors (7).

The above-described processing is repeatedly executed on individual sentences of the other texts included in the DB 143, and thus, the pre-processing unit 151 calculates sentence vectors of the respective sentences.

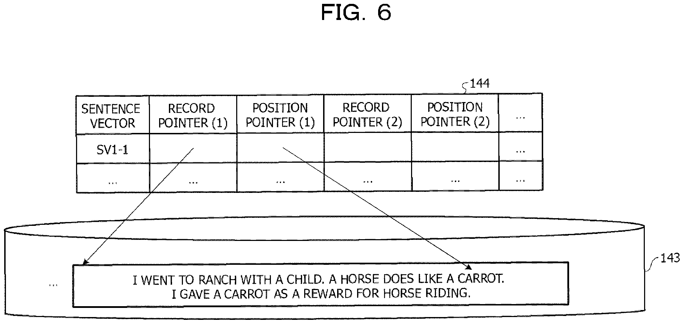

The pre-processing unit 151 generates the sentence transposition index 144 by associating the calculated sentence vectors of the respective sentences with the position pointers of the DB 143. Note that the pre-processing unit 151 may generate the sentence transposition index 144 having a data structure illustrated in FIG. 6. FIG. 6 is a diagram for describing processing of generating the sentence transposition index. As illustrated in FIG. 6, the pre-processing unit 151 may associate the sentence vectors, a plurality of record pointers, and a plurality of position pointers with each other, and may associate the individual record pointers and the position pointers with the respective sentences of the DB 143.

The description returns to FIG. 3. By executing the processing in the learning phase described in FIG. 1, the learning unit 152 generates the machine learning model 50 that predicts the sentence vector of the second sentence next to the certain first sentence in a case where the sentence vector of the first sentence is input.

For example, the learning unit 152 executes the learning of the machine learning model 50 by calculating the sentence vectors of the respective sentences included in the text of the teaching data 141 and sequentially inputting the calculated sentence vectors to the machine learning model 50. Other processing of the learning unit 152 is similar to the processing described in FIG. 1. Processing of, by the learning unit 152, calculating the sentence vectors of the sentences is similar to the processing of, by the pre-processing unit 151, calculating the sentence vectors of the sentences.

By executing the processing in the analysis phase described in FIG. 2, the analysis unit 153 detects a sentence having an inappropriate sentence vector from the sentences included in the text to be processed.

For example, in a case where the text 20 to be processed is received, the analysis unit 153 calculates the sentence vectors of the sentences included in the text 20. The analysis unit 153 specifies the sentences included in the text 20 based on periods "." included in the text 20. Processing of, by the analysis unit 153, calculating the sentence vectors of the sentences is similar to the processing of, by the pre-processing unit 151, calculating the sentence vectors of the sentences. A sentence vector of an n-th sentence from the first sentence of the text 20 is denoted by "SVn" (n = 0 to M).

The analysis unit 153 predicts a sentence vector SVn+1' of an (n+1)-th sentence from the first sentence of the text 20 by inputting the sentence vector SVn to the trained machine learning model 50. The analysis unit 153 calculates a cosine similarity between the sentence vector SVn+1' predicted by using the machine learning model 50 and a vector SVn+1 of the sentence.

In a case where the cosine similarity between the sentence vector SVn+1' and the sentence vector SVn+1 is greater than or equal to a threshold value, the analysis unit 153 determines that the (n+1)-th sentence from the first sentence is an appropriate sentence. On the other hand, in a case where the cosine similarity between the sentence vector SVn+1' and the sentence vector SVn+1 is greater than or equal to the threshold value, the analysis unit 153 determines that the (n+1)-th sentence from the first sentence is a sentence having an inappropriate sentence vector.

In a case where it is determined that the sentence is the sentence having the inappropriate sentence vector, the analysis unit 153 compares the sentence vector SVn+1' with the sentence transposition index 144, and specifies the position pointer of the sentence corresponding to the sentence vector SVn+1'. The analysis unit 153 searches for the sentence corresponding to the sentence vector SVn+1' from the DB 143 based on the position pointer. The analysis unit 153 displays, on the display unit 130, the sentence having the inappropriate sentence vector and the searched sentence in association with each other.

The analysis unit 153 may compare the sentence having the inappropriate sentence vector with the searched sentence on a word-by-word basis, may detect a word with an input error from the sentence having the inappropriate sentence vector, and may display the detected word.

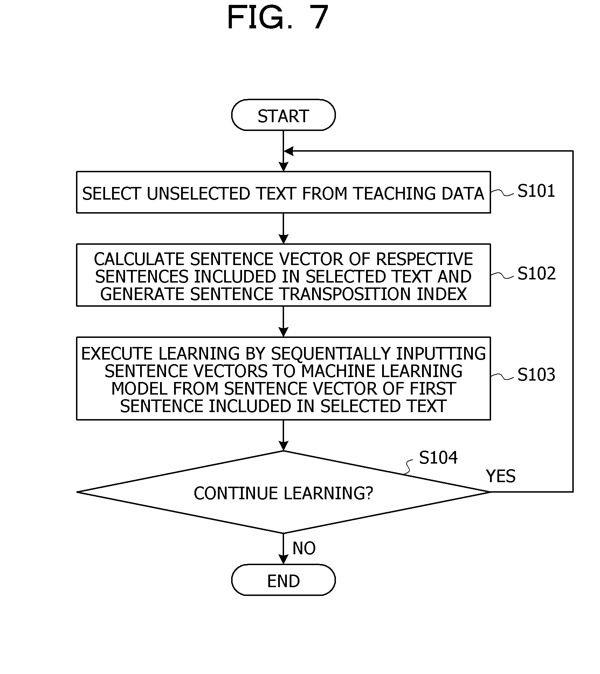

Next, an example of a processing procedure of the information processing apparatus 100 according to the present embodiment will be described. FIG. 7 is a flowchart illustrating a processing procedure in the learning phase of the information processing apparatus according to the present embodiment. As illustrated in FIG. 7, the learning unit 152 of the information processing apparatus 100 selects an unselected text from the teaching data 141 (step S101).

The learning unit 152 calculates sentence vectors of respective sentences included in the selected text, and generates a sentence transposition index in which the sentence vectors, the records in the DB, and the positions of the sentences are associated with each other (step S102). The learning unit 152 executes learning by sequentially inputting the sentence vectors to the machine learning model 50 from the sentence vector of the first sentence included in the selected text (step S103).

In a case where learning is continued (Yes in step S104), the learning unit 152 proceeds to step S101. In a case where learning is not continued (No in step S104), the learning unit 152 ends the processing in the learning phase.

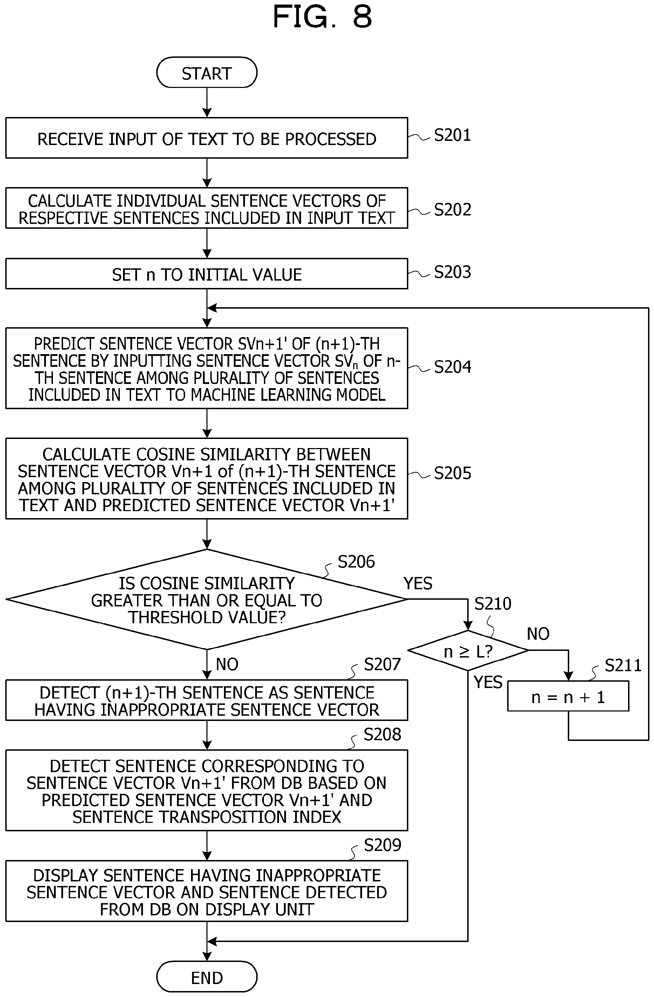

FIG. 8 is a flowchart illustrating a processing procedure in the analysis phase of the information processing apparatus according to the present embodiment. As illustrated in FIG. 8, the analysis unit 153 of the information processing apparatus 100 receives an input of a text to be processed (step S201).

The analysis unit 153 calculates individual sentence vectors of respective sentences included in the input text (step S202). The analysis unit 153 sets n to an initial value (step S203).

The analysis unit 153 predicts the sentence vector SVn+1' of the (n+1)-th sentence by inputting the sentence vector SVn of the n-th sentence among the plurality of sentences included in the text to the machine learning model 50 (step S204).

The analysis unit 153 calculates the cosine similarity between the sentence vector SVn+1 of the (n+1)-th sentence and the predicted sentence vector SVn+1' of the sentence among the plurality of sentences included in the text (step S205).

In a case where the cosine similarity is greater than or equal to the threshold value (Yes in step S206), the analysis unit 153 proceeds to step S210.

On the other hand, in a case where the cosine similarity is not greater than or equal to the threshold value (No in step S206), the analysis unit 153 detects the (n+1)-th sentence as the sentence having the inappropriate sentence vector (step S207). The analysis unit 153 detects the sentence corresponding to the sentence vector SVn+1' from the DB 143 based on the predicted sentence vector SVn+1' and the sentence transposition index 144 (step S208).

The analysis unit 153 displays, on the display unit 130, the sentence having the inappropriate sentence vector and the sentence detected from the DB 143 (step S209).

Processing in step S210 and subsequent steps will be described. In a case where n is greater than or equal to L (Yes in step S210), the analysis unit 153 ends the processing. L is the number of sentences included in the text to be processed. In a case where n is not greater than or equal to L (No in step S210), the analysis unit 153 updates n by a value obtained by adding 1 to n (step S211), and proceeds to step S204.

Next, effects of the information processing apparatus 100 according to the present embodiment are described. The information processing apparatus 100 generates the machine learning model 50 that predicts the sentence vector of the second sentence next to the certain first sentence in a case where the sentence vector of the first sentence is input by sequentially inputting the vectors of the respective sentences of the text included in the teaching data 141 to the machine learning model 50. The information processing apparatus 100 predicts the sentence vector of the next sentence by inputting the sentence vectors of the sentences of the text to be processed to the generated machine learning model 50, and detects the sentence having the inappropriate sentence vector from the text to be processed based on the predicted sentence vector. In addition, the word with the input error or the like may be corrected from the inappropriate sentence.

The information processing apparatus 100 detects the sentence having the inappropriate sentence vector based on the cosine similarity between the sentence vector of the next sentence predicted by the machine learning model 50 and the sentence vector of the next sentence of the sentence included in the text to be processed, and corrects the input error or the like. Accordingly, calculation cost is suppressed, the sentence having the inappropriate sentence vector is detected, and thus, the input error or the like may be corrected.

The information processing apparatus 100 sequentially inputs, to the machine learning model, the vectors of the plurality of sentences, the arrangement order of which is determined based on the inductive method or the deductive method, and trains the machine learning model. Accordingly, a next sentence of a target sentence may be predicted based on the inductive method or the deductive method.

In a case where it is determined that the sentence is a sentence to be revised, the information processing apparatus 100 searches for a corrected sentence based on the vector predicted by the machine learning model 50. Accordingly, the revised sentence may be notified.

Note that the processing content of the information processing apparatus 100 described above is an example, and the information processing apparatus 100 may execute other processing. The other processing of the information processing apparatus 100 will be described below.

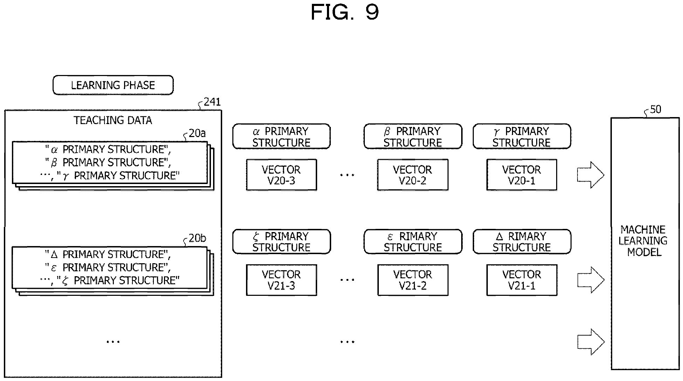

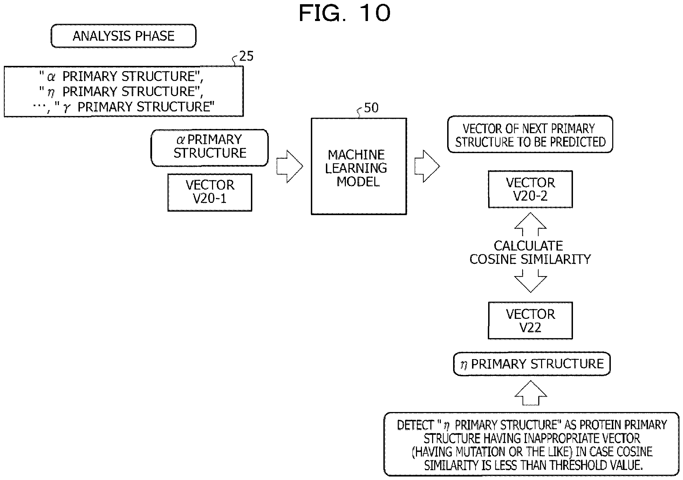

FIGs. 9 and 10 are diagrams for describing the other processing of the information processing apparatus. Although the above-described information processing apparatus 100 causes the machine learning model 50 to learn the order of sentence vectors based on the syllogism, the information processing apparatus may cause the machine learning model to learn the order of vectors of a protein primary structure, which is a sequence of a protein and is constituted by a plurality of amino acid sequences corresponding to words, instead of the sentence vectors. In the following description, a continuous amino acid sequence of a protein is referred to as a "basic structure", and a protein primary structure is referred to as a "primary structure".

FIG. 9 is described. In the learning phase, the information processing apparatus 100 executes learning of the machine learning model 50 by using sequences 20a and 20b of a plurality of proteins included in teaching data 241.

For example, the sequence 20a includes primary structures "α primary structure", "β primary structure", ···, and "γ primary structure". The sequence 20b includes primary structures "Δ primary structure", "ε primary structure", ···, and "ζ primary structure".

The information processing apparatus 100 specifies vectors of respective primary structures by using a vector dictionary of basic structures of proteins in which basic structures and vectors are associated with each other. For example, a vector of the primary structure "α primary structure" constituted by a plurality of basic structures is "V20-1", a vector of the primary structure "β primary structure" is "V20-2", and a vector of the primary structure "γ primary structure" is "V20-3". A vector of the primary structure "Δ primary structure" is "V21-1", a vector of the primary structure "ε primary structure" is "V21-2", and a vector of the primary structure "ζ primary structure" is "V21-3". The vector of each primary structure is calculated based on the vectors of the respective basic structures of the plurality of basic structures constituting that primary structure.

The information processing apparatus 100 repeatedly executes processing of inputting the vectors to the machine learning model 50 in order from a vector of a first primary structure included in the sequence of the protein. For example, the information processing apparatus inputs the vectors to the machine learning model 50 in the order of the vectors "V20-1", "V20-2", ···, and "V20-3". The information processing apparatus inputs the vectors to the machine learning model 50 in the order of the vectors "V21-1", "V21-2", ···, and "V21-3".

By the information processing apparatus 100 executing the processing in the learning phase described above, the machine learning model 50 that predicts a vector of a primary structure next to a certain primary structure in a case where a vector of the primary structure is input is generated.

FIG. 10 is described. In the analysis phase, a sequence of a protein to be processed is a sequence 25. Primary structures "α primary structure", "η primary structure", ···, and "γ primary structure" are included in the sequence 25 in order from a first primary structure.

The information processing apparatus 100 predicts a vector of a primary structure next to the primary structure "α primary structure" by calculating the vector "V20-1" of the primary structure "α primary structure" and inputting the calculated vector "V20-1" to the machine learning model 50. In the example illustrated in FIG. 10, "V20-2" is predicted by the machine learning model 50, as the vector of the primary structure next to the primary structure "α primary structure".

The information processing apparatus 100 calculates a vector "V22" of the "η primary structure", which is a primary structure included in the sequence 25 and is next to the primary structure "α primary structure".

The information processing apparatus 100 calculates a cosine similarity between the vector "V20-2" of the next primary structure predicted by the machine learning model 50 and the vector "V22" of the "η primary structure" next to the basic structure "α primary structure", which is the primary structure included in the sequence 25.

In a case where the cosine similarity is greater than or equal to a threshold value, the information processing apparatus determines that the "η primary structure", which is the primary structure included in the sequence 25 and is next to the primary structure "α primary structure", is a correct primary structure. On the other hand, in a case where the cosine similarity is less than the threshold value, the information processing apparatus determines that the "η primary structure", which is the primary structure included in the sequence 25 and is next to the primary structure "α primary structure", is an inappropriate primary structure, and corrects a mutation or the like of the basic structure included in the primary structure "η primary structure".

By the information processing apparatus 100 executing the processing illustrated in FIGs. 9 and 10, a primary structure having an inappropriate primary structure vector may be detected from the plurality of primary structures included in the sequence of the protein, and a basic structure having a mutation or the like may be corrected. Accordingly, a protein primary structure having a mutation or the like (SNPs is a representative example) occurring in a receptor constituted by a plurality of protein primary structures may be detected. Further, by performing machine learning on a large number of protein primary structures constituting the receptor and a single or a plurality of protein primary structures bound to the receptor in order of binding, a vector of a protein primary structure of a ligand bound to the receptor may be predicted. Accordingly, improvement of a ligand having a vector of a new protein primary structure, which is similar to a ligand already commercialized as a biopharmaceutical, has an excellent medicinal effect, and in which side reactions are suppressed may be supported.

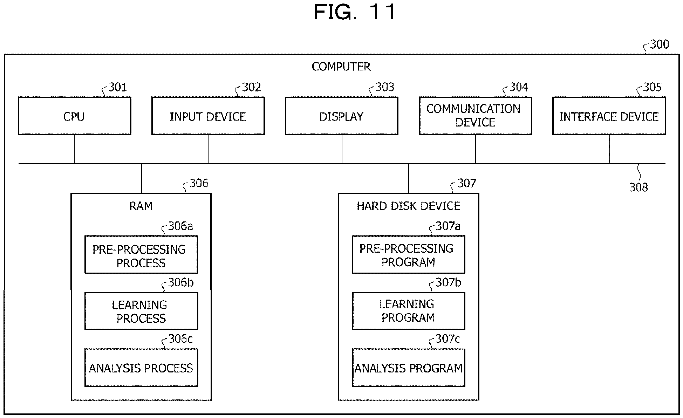

Next, an example of a hardware configuration of a computer that implements functions similar to the functions of the information processing apparatus 100 illustrated in the above embodiment will be described. FIG. 11 is a diagram illustrating an example of the hardware configuration of the computer that implements the functions similar to the functions of the information processing apparatus according to the embodiment.

As illustrated in FIG. 11, a computer 300 includes a CPU 301 that executes various types of arithmetic processing, an input device 302 that receives input of data from a user, and a display 303. The computer 300 also includes a communication device 304 that exchanges data with an external apparatus or the like via a wired or wireless network, and an interface device 305. The computer 300 also includes a RAM 306 that temporarily stores various types of information and a hard disk device 307. Each of the individual devices 301 to 307 is coupled to a bus 308.

The hard disk device 307 includes a pre-processing program 307a, a learning program 307b, and an analysis program 307c. In addition, the CPU 301 reads the individual programs 307a to 307c and loads the programs into the RAM 306.

The pre-processing program 307a functions as a pre-processing process 306a. The learning program 307b functions as a learning process 306b. The analysis program 307c functions as an analysis process 306c.

Processing of the pre-processing process 306a corresponds to the processing of the pre-processing unit 151. Processing of the learning process 306b corresponds to the processing of the learning unit 152. Processing of the analysis process 306c corresponds to processing of the analysis unit 153.

Note that each of the programs 307a to 307c may not be stored in the hard disk device 307 from the beginning. For example, each program may be stored in a "portable physical medium" such as a flexible disk (FD), a CD-ROM, a DVD, a magneto-optical disk, an IC card, or the like inserted in the computer 300. The computer 300 may read and execute each of the programs 307a to 307c. Reference Signs List

## Claims

1. An information processing program causing a computer to execute a process comprising:
calculating individual vectors of a plurality of continuous sentences that have a relationship with preceding and following sentences;
generating a machine learning model that predicts a sentence vector of a sentence input next to a certain sentence when a vector of the certain sentence is input to the machine learning model, by sequentially inputting the vectors of the plurality of sentences to the machine learning model and training the machine learning model;
calculating a vector of a first sentence and a vector of a second sentence next to the first sentence; and
calculating a vector of a sentence predicted to be next to the first sentence by inputting the vector of the first sentence to the machine learning model, and determining whether or not the vector of the second sentence is appropriate.

2. The information processing program according to claim 1, wherein the determining is determining whether or not the vector of the second sentence is appropriate based on a cosine similarity between the vector predicted by inputting the vector of the first sentence to the machine learning model and the vector of the second sentence.

3. The information processing program according to claim 2, wherein the plurality of continuous sentences are a plurality of sentences of which an arrangement order is determined based on an inductive method or a deductive method, and the generating of the machine learning model is sequentially inputting the vectors of the plurality of sentences of which the arrangement order is determined based on the inductive method or the deductive method to the machine learning model and training the machine learning model.

4. The information processing program according to claim 1, wherein the computer is caused to further execute a process of calculating the vector of the sentence predicted to be next to the first sentence by inputting the vector of the first sentence to the machine learning model, and recommending an appropriate sentence based on the calculated vector of the sentence predicted to be next to the first sentence in order to search for a sentence similar to the calculated vector and present the searched sentence as a candidate for the appropriate sentence, in a case where it is determined that the vector of the second sentence is inappropriate.

5. An information processing method implemented by a computer, the information processing method comprising:
calculating individual vectors of a plurality of continuous sentences that have a relationship with preceding and following sentences;
generating a machine learning model that predicts a sentence vector of a sentence input next to a certain sentence when a vector of the certain sentence is input to the machine learning model, by sequentially inputting the vectors of the plurality of sentences to the machine learning model and training the machine learning model;
calculating a vector of a first sentence and a vector of a second sentence next to the first sentence; and
calculating a vector of a sentence predicted to be next to the first sentence by inputting the vector of the first sentence to the machine learning model, and determining whether or not the vector of the second sentence is appropriate.

6. The information processing method according to claim 5, wherein the determining is determining whether or not the vector of the second sentence is appropriate based on a cosine similarity between the vector predicted by inputting the vector of the first sentence to the machine learning model and the vector of the second sentence.

7. The information processing method according to claim 6, wherein the plurality of continuous sentences are a plurality of sentences of which an arrangement order is determined based on an inductive method or a deductive method, and the generating of the machine learning model is sequentially inputting the vectors of the plurality of sentences of which the arrangement order is determined based on the inductive method or the deductive method to the machine learning model and training the machine learning model.

8. The information processing method according to claim 5, wherein the computer is caused to further execute a process of calculating the vector of the sentence predicted to be next to the first sentence by inputting the vector of the first sentence to the machine learning model, and recommending an appropriate sentence based on the calculated vector of the sentence predicted to be next to the first sentence in order to search for a sentence similar to the calculated vector and present the searched sentence as a candidate for the appropriate sentence, in a case where it is determined that the vector of the second sentence is inappropriate.

9. An information processing apparatus comprising:
a control unit configured to execute a process including:
calculating individual vectors of a plurality of continuous sentences that have a relationship with preceding and following sentences;
generating a machine learning model that predicts a sentence vector of a sentence input next to a certain sentence when a vector of the certain sentence is input to the machine learning model, by sequentially inputting the vectors of the plurality of sentences to the machine learning model and training the machine learning model;
calculating a vector of a first sentence and a vector of a second sentence next to the first sentence; and
calculating a vector of a sentence predicted to be next to the first sentence by inputting the vector of the first sentence to the machine learning model, and determining whether or not the vector of the second sentence is appropriate.

10. The information processing apparatus according to claim 9, wherein the determining is determining whether or not the vector of the second sentence is appropriate based on a cosine similarity between the vector predicted by inputting the vector of the first sentence to the machine learning model and the vector of the second sentence.

11. The information processing apparatus according to claim 10, wherein the plurality of continuous sentences are a plurality of sentences of which an arrangement order is determined based on an inductive method or a deductive method, and the generating of the machine learning model is sequentially inputting the vectors of the plurality of sentences of which the arrangement order is determined based on the inductive method or the deductive method to the machine learning model and training the machine learning model.

12. The information processing apparatus according to claim 9, wherein the computer is caused to further execute a process of calculating the vector of the sentence predicted to be next to the first sentence by inputting the vector of the first sentence to the machine learning model, and recommending an appropriate sentence based on the calculated vector of the sentence predicted to be next to the first sentence in order to search for a sentence similar to the calculated vector and present the searched sentence as a candidate for the appropriate sentence, in a case where it is determined that the vector of the second sentence is inappropriate.
